# EUROPEAN PATENT APPLICATION

(11) **EP 1 460 564 A2**
(43) Date of publication of application: **22.09.2004**
(21) Application number: 04001021.7
(22) Date of filing: 19.01.2004
(51) Int. Cl.: G06F 17/30, H04N 7/025, H04N 5/00, G06K 9/00

(54) **Method and apparatus for reproducing digital data including video data**

(30) Priority: 28.02.2003 JP 2003053813
(71) Applicant: Kabushiki Kaisha Toshiba, Tokyo (JP)
(72) Inventor: Kitamura, Tetsuya c/o KABUSHIKI KAISHA TOSHIBA, Minato-ku Tokyo 105-8001 (JP); Matsuki, Shinichi c/o KABUSHIKI KAISHA TOSHIBA, Minato-ku Tokyo 105-8001 (JP)
(74) Representative: Henkel, Feiler & Hänzel

(57) **Abstract**

There is disclosed a data reproducing apparatus which reproduces AV digital data. A CPU (20) of the data reproducing apparatus compares an object data pattern prepared from digital data which is a reproduction object with a data pattern for determining included in data for determining stored in a database (22). The CPU (20) determines that the object data pattern is a reproduction prohibition object data pattern according to a comparison result when both the patterns are identical or similar to each other. The CPU (20) executes reproduction processing including processing to remove data corresponding to the reproduction prohibition object data pattern with respect to the AV digital data.

## Description

The present invention relates, in general, to a field of a data reproducing apparatus which reproduces/outputs digital data such as digital video data, particularly to a technique of a reproduction control of reproduction prohibition object data included in digital data.

In recent years, digital broadcasting for broadcasting especially audio and video (AV) content in a digital data form, or a service for distributing the AV content via the Internet has spread. A service for providing the AV content via recording media such as a digital versatile disc (DVD) has also become general.

On the other hand, development of a digital recording/reproducing system has been promoted such as a home server in which individual apparatuses including a conventional personal computer, various digital recording/reproducing apparatuses, and a television set are integrated. With this home server, an environment is realized in which the AV content is easily provided via the digital broadcasting, the Internet, or any of recording media.

Additionally, when AV data constituting the AV contents of the digital data form is reproduced/output (screen display or sound output), there is a possibility that scenes in which video or sound content makes audiences feel uncomfortable or is not good for children from an educational standpoint are displayed. These AV data include not only represented content but also video which has a so-called subliminal effect.

A prior art for removing subliminal video included in the AV data has heretofore been proposed (e.g., see Jpn. Pat. Appln. KOKAI Publication No. 9-284667).

A reproducing apparatus of the AV data is required to have a function capable of executing a reproduction output control to remove or change a part of the data included in the AV data because the data is unpleasant for the audiences or is unfavorable from an educational standpoint. For the function of removing the subliminal video, the above-described prior art has been proposed.

However, a function of controlling the reproduction/output to remove data having a data pattern identical or similar to that set beforehand as a reproduction prohibition object from the digital data which is a reproduction object has not been concretely realized.

An object of the present invention is to provide a data reproducing apparatus to reproduce digital data from which data of a reproduction prohibition object has been removed.

The present data reproducing apparatus includes: a buffer memory which stores digital data of a reproduction object; a storage unit which stores data for determining to identify a reproduction prohibition object data pattern; a determining unit which uses the data for determining to determine whether or not the digital data stored in the buffer memory includes the reproduction prohibition object data pattern; and a control unit which processes data corresponding to the reproduction prohibition object data pattern in accordance with a determining result of the determining unit and executes reproduction processing of the digital data except for the reproduction prohibition object data pattern.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a constitution of a data reproducing apparatus in accordance with a first embodiment of the present invention;
FIG. 2 is a flowchart showing a procedure of a reproduction control operation in accordance with the first embodiment;
FIG. 3 is a flowchart showing the procedure of the reproduction control operation in accordance with a second embodiment; and
FIG. 4 is a block diagram showing the constitution of the data reproducing apparatus in accordance with a third embodiment.

### (First Embodiment)

A first embodiment will hereinafter be described with reference to the drawings.

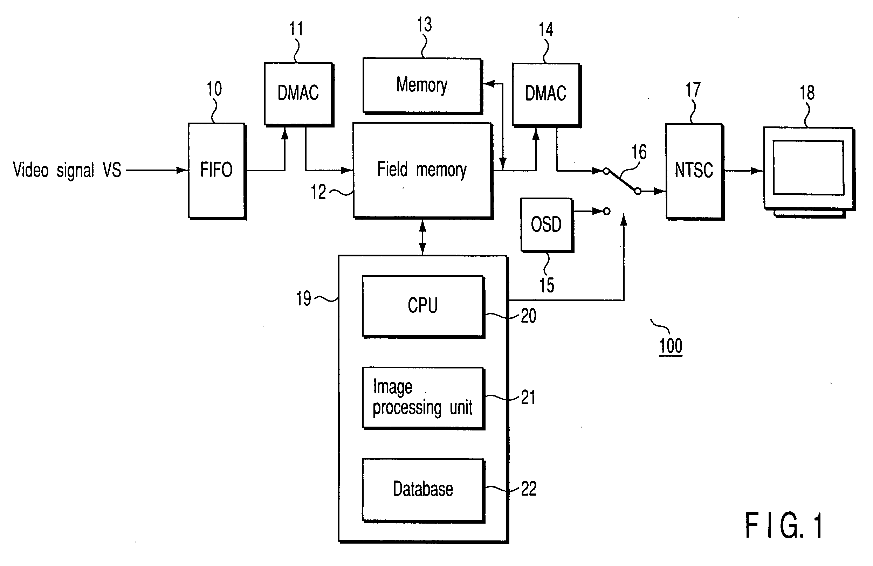

FIG. 1 is a block diagram showing a major part of a digital reproducing system 100 including a data reproducing apparatus in accordance with the present embodiment.

The digital reproducing system 100 receives a video signal (digital stream data) VS transmitted, for example, via the Internet, reproduces the signal, and outputs the signal to a display device 18. The display device 18 displays reproduced video (also including a static image) on a display, and outputs sound via a speaker.

The data reproducing apparatus includes a buffer memory 10 of a first-in first-out (FIFO) type which receives the stream data VS, direct memory access (DMA) controllers 11, 14, a field memory (frame buffer) 12, and a flash memory 13.

The DMA controller 11 transfers the stream data stored in the buffer memory 10 to the field memory 12 by a frame unit. The field memory 12 stores digital data by a field unit (e.g., for several frames). The DMA controller 14 transfers the data stored in the field memory 12 to an NTSC circuit 17 described later. The flash memory 13 stores, for example, a substitute data pattern for a prohibition object data pattern.

Furthermore, the data reproducing apparatus includes an on screen display (OSD) circuit 15, a switch circuit 16, the NTSC circuit 17, and a controller 19 which executes a reproduction control. The OSD circuit 15 produces a data signal for superimposition of character pattern data. The NTSC circuit 17 outputs a television video signal and a sound signal of a National Television System Committee (NTSC) system to the display device 18.

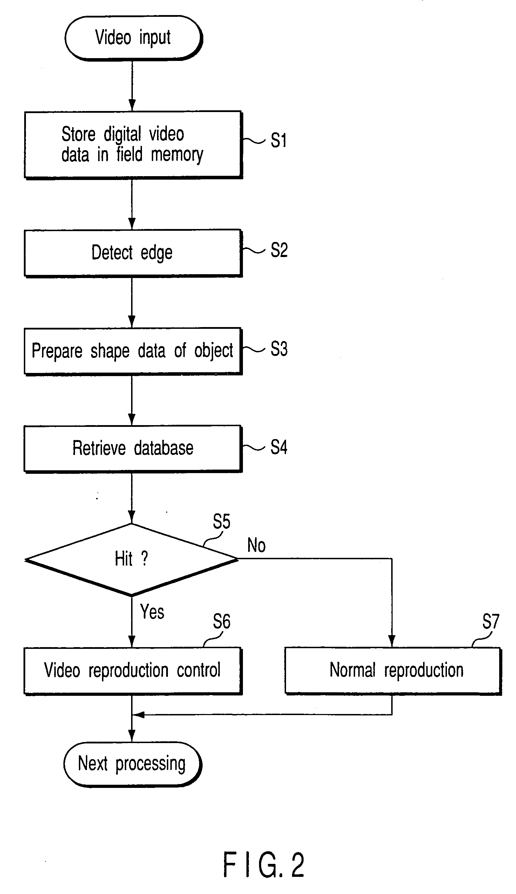

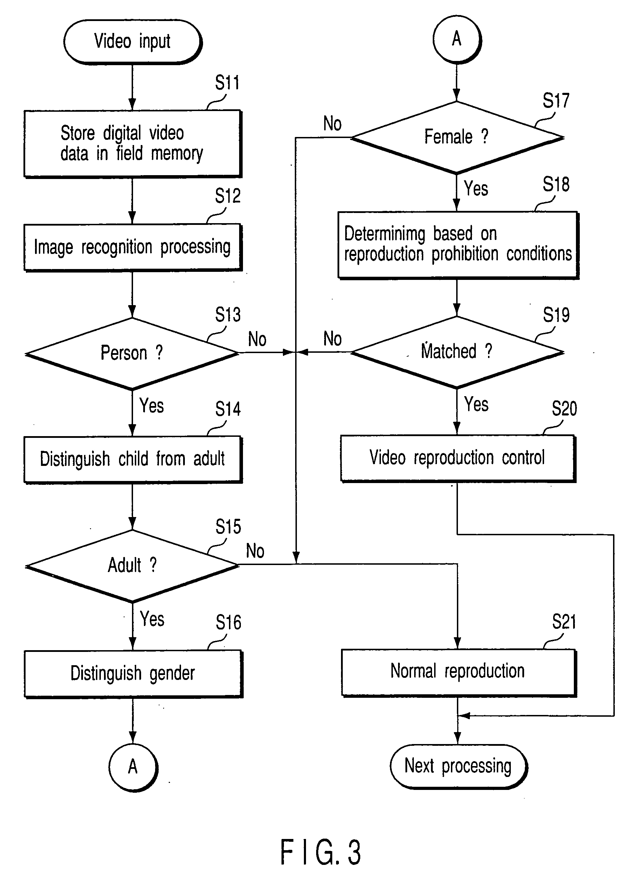

The controller 19 includes a microprocessor (CPU) 20, an image processing unit (also referred to as a filter) 21, and a database 22. The CPU 20 executes a reproduction control in accordance with the present embodiment as described later (see FIGS. 2 and 3).

The image processing unit 21 compresses/processes image data (screen data) which is the data pattern extracted by the CPU 20 to produce the data pattern which is a comparison object. Furthermore, the image processing unit 21 processes the image in order to compare the produced data pattern with a data pattern for determining (data pattern of the reproduction prohibition object) included in the data for determining stored in the database 22. The image processing unit 21 is concretely software executed by the CPU 20 or dedicated hardware.

The database 22 means a storage device in which the data for determining indicating reproduction prohibition conditions is stored, and software for retrieving the data for determining. The data for determining includes the data pattern for determining to determine the prohibition object data pattern to be prohibited from being reproduced. The data pattern for determining is compressed screen data such as a compressed thumbnail.

### (Operation of Reproduction Control)

A procedure of a reproduction control operation in accordance with the present embodiment will hereinafter be described with reference to a flowchart of FIG. 2 together with FIG. 1.

The data reproducing apparatus stores the received stream data VS in the field memory 12 (step S1). Here, in the present embodiment, only video data is an object to be handled in a stream of AV data.

The CPU 20 uses the image processing unit 21 to execute image recognition processing with respect to data (e.g., image data for several frames) stored in the field memory 12 (step S2). Concretely, the CPU 20 detects an edge of an image (change point of brightness) to obtain contours of the object. The CPU 20 further produces shape data pattern formed of the obtained contours (step S3).

The CPU 20 uses the image processing unit 21 to change the produced shape data pattern to compressed data. The CPU 20 retrieves the database 22 for the data for determining to determine whether or not the data pattern for determining agreeing with the shape data pattern exists (steps S4, S5).

In the database 22, the data pattern for determining is stored to determine the prohibition object data pattern set beforehand as the reproduction prohibition object. Examples of the data pattern for determining include a data pattern by which the data pattern set as the reproduction prohibition object such as a so-called adult image can be detected.

The CPU 20 determines a degree of similarity of the produced shape data pattern with respect to any of the data patterns for determining stored in the database 22 based on a result of image processing of the filter 21 and a predetermined threshold value (threshold value for determining of similarity of an image pattern). The CPU 20 executes a predetermined reproduction control, when the determining result indicates the identity or the similarity (YES in step S5, S6).

Concretely, the CPU 20 removes the data (part of video data) determined as the reproduction prohibition object data pattern by the determining result from the received stream data VS, and transfers the stream data to the NTSC circuit 17.

At this time, the CPU 20 controls the switch circuit 16 to transfer character pattern data notifying that, for example, the adult image is removed from the OSD circuit 15 to the NTSC circuit 17. Accordingly, the video is displayed/output and a comment including a character string is superimposed on the screen of the display device 18. Accordingly, a user can confirm the video reproduced from the received stream data VS and the comment indicating that, for example, the adult image has been removed from the video on the screen of the display device 18.

Moreover, the CPU 20 may also execute a control so as to extract the substitute data pattern for the prohibition object data pattern removed from the stream data VS from the flash memory 13 and to transfer the pattern to the NTSC circuit 17.

On the other hand, the CPU 20 executes normal reproduction output processing to transfer the stream data to the NTSC circuit 17, when the stream data stored in the field memory 12 does not include the reproduction prohibition object data pattern (NO in step S5, S7).

In the present embodiment, the CPU 20 determines the reproduction prohibition object data pattern to be extracted from the stream data based on the shape pattern of the image. Additionally, the CPU 20 may also execute a control so as to prohibit the reproduction/output of so-called flash video as the reproduction prohibition object data by an algorithm in which integration of a luminance or color difference signal is periodically compared.

Moreover, the CPU 20 may recognize/process the character pattern included in the screen and determine a character pattern string in which characters are unfavorably represented as the reproduction prohibition object data pattern based on the character recognition result (including the similarity). In this case, a standard integrated value of the luminance or color difference signal constituting the prohibition object, or the recognition result constituted of the character string constituting the prohibition object is stored beforehand in the database 22.

### (Second Embodiment)

FIG. 3 is a flowchart showing the procedure of the reproduction control operation in accordance with a second embodiment. In the data reproducing apparatus of the present embodiment, the so-called adult image is extracted from the stream data, and processed as the reproduction prohibition object data. Concretely, the present embodiment relates to a method in which image recognition processing, inference algorithm, and pattern matching processing by use of the database 22 are combined. The method will hereinafter be described with reference to the flowchart of FIG. 3.

The data reproducing apparatus stores the received stream data VS in the field memory 12 (step S11). The CPU 20 uses the image processing unit 21 to execute image recognition processing with respect to the data (e.g., image data for several frames) stored in the field memory 12 (step S12).

First, the CPU 20 detects the edge of the image (change point of brightness), and obtains the contours of the object. The CPU 20 extracts a person based on the shape pattern constituted of the contours. Concretely, the CPU 20 determines whether or not a portion corresponding to a face exists from the shape pattern. The CPU 20 also determines whether or not color information corresponding to color of skin exists. The CPU 20 further presumes the person from a positional relation of parts such as face, body, and limbs.

When the existence of the person cannot be presumed from the image data by the extraction processing of the person, the CPU 20 shifts to normal reproduction output processing with respect to the stream data (NO in step S13, S21). On the other hand, when the person can be extracted, the CPU 20 shifts to inference processing for determining whether the person is a child or an adult (YES in step S13, S14).

In this inference processing, the CPU 20 calculates information such as a ratio (life size) of the head, limbs, and body constituting the person, coordinate information of eyes and nose, and track and speed of movement of the limbs, and determines whether the extracted person is a child or an adult based on a calculation result (step S15). The CPU 20 determines that the extracted person is the child, and then shifts to normal reproduction output processing with respect to the stream data (NO in step S15, S21).

On the other hand, the CPU 20 shifts to the inference processing for determining gender, when determining that the extracted person is an adult (YES in step S15, S16). In this inference processing, the CPU 20 calculates information on length of persons' hair and person's build (balance of shoulders, breasts, hips, and legs or whole body line) to determine whether or not the extracted person is an adult female based on the calculation results (step S17).

When determining that the extracted person is an adult male, the CPU 20 shifts to the normal reproduction output processing with respect to the stream data (NO in step S17, S21).

On the other hand, when determining that the extracted person is an adult female, the CPU 20 shifts to processing to determine whether or not the image corresponds to the prohibition object data pattern (adult image) (YES in step S17, S18). Here, the CPU 20 determines whether or not the image is the adult image based on data (data for determining the reproduction prohibition object data pattern) indicating the reproduction prohibition conditions stored beforehand in the database 22.

In the determining processing, the CPU 20 uses information indicating whether or not the color of the whole body is identical or similar to that of the face, the presence/absence of protrusions in a portion corresponding to the breasts (can be determined based on a frequency), or a position of a portion having a color different from the skin color as reproduction prohibition condition data.

In short, the CPU 20 determines whether or not the image corresponding to the identified adult female is the adult image based on the presence/absence of clothing or a ratio of a portion corresponding to the clothing over the whole body. When presuming that the data meets the reproduction prohibition condition data and presuming complete nudity or a half clothed state, the CPU 20 determines that the image is the adult image (YES in step S19). On the other hand, for a person who wears swimsuits, the CPU 20 determines that the reproduction prohibition conditions are not matched, and shifts to usual reproduction processing (NO in step S19, S21).

When determining that the image of the extracted person is the adult image (prohibition object data pattern) by the above-described inference processing, the CPU 20 executes a predetermined reproduction control as described above (step S20). Concretely, the CPU 20 removes the data corresponding to the adult image from the received stream data VS, and transfers the stream data to the NTSC circuit 17.

As described above, in accordance with the present embodiment, when the image of the person extracted from the stream data is identical or similar to an image having a predetermined state (i.e., the image assumed to be an adult image), the CPU 20 can prohibit the display/output of the image of the person. Additionally, the CPU 20 determines whether or not the image of the person is an adult image based on the reproduction prohibition condition data stored in the database 22. Therefore, naturally determining criteria differ with the content of the reproduction prohibition condition data.

### (Third Embodiment)

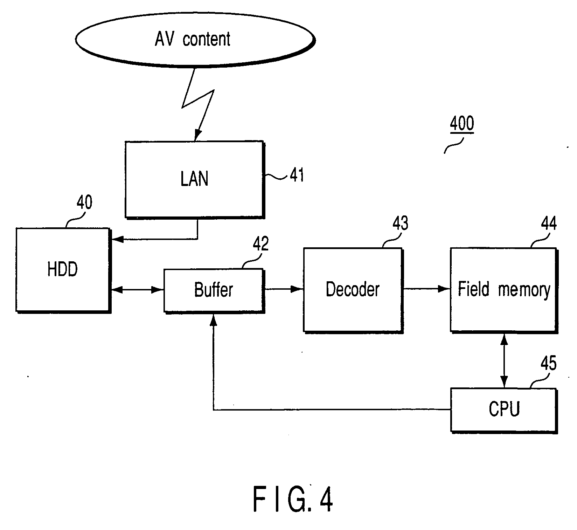

FIG. 4 is a block diagram showing the constitution of a system to which the data reproducing apparatus of a third embodiment is applied.

A digital recording/reproducing system 400 of the present embodiment includes a hard disk drive (HDD) 40 as recording media. The present system 400 records AV content data transferred, for example, via a home LAN 41 in the HDD 4, and extracts designated AV content data from the HDD 40 in response to a reproduction request to reproduce/output the data.

The data reproducing apparatus of the present embodiment extracts the designated AV content data from the HDD 40 in response to the reproduction request to temporarily store the data in a buffer memory 42. A decoder 43 restores the data stored in the buffer memory 42 (processing for extending the compressed data), and stores the data in a field memory 44.

A CPU 45 determines whether or not the data stored in the field memory 44 has the reproduction prohibition object data pattern (also including an adult image) in the same manner as in the first embodiment. When it is determined that the data pattern is identical or similar to that of the reproduction prohibition object by the determining result, the CPU 45 removes the corresponding data from the AV content data stored in the buffer memory 42.

By this processing, the data reproducing apparatus executes correction processing in the buffer memory 42 to remove the data corresponding to the prohibition object data pattern from the reproduction object data extracted from the HDD 40. The data reproducing apparatus transfers the reproduction object data subjected to the correction processing to the NTSC circuit 17 via the decoder 43 and field memory 44.

As described above, in short, in accordance with each embodiment, data having the same data pattern as or a data pattern similar to that set beforehand as the reproduction prohibition object can be removed from the digital data which is the reproduction object especially in the data reproducing apparatus for reproducing/outputting the AV content data. Therefore, it is possible to remove an image unfavorable from an educational standpoint or an unpleasant image (e.g., flash video) from the screen data displayed/output on the display screen beforehand, or to change the unfavorable or unpleasant image to another image beforehand.

## Claims

1. A data reproducing apparatus, **characterized by** comprising:
a buffer memory (12) which stores digital data of a reproduction object;
a storage unit (22) which stores data for determining to determining a reproduction prohibition object data pattern;
a determining unit (20) which uses the data for determining to determine whether or not the digital data stored in the buffer memory (12) includes the reproduction prohibition object data pattern; and
a control unit (19) which processes data corresponding to the reproduction prohibition object data pattern in accordance with a determining result of the determining unit (20) and executes reproduction processing of the digital data except for the reproduction prohibition object data pattern.

2. The data reproducing apparatus according to claim 1, **characterized in that** the data for determining includes a data pattern for determining to identify the reproduction prohibition object data pattern, and
the determining unit (20, 21) compares an object data pattern prepared from the digital data with the data pattern for determining, and determines that the object data pattern is the reproduction prohibition object data pattern, when the object data pattern is identical or similar to the data pattern for determining.

3. The data reproducing apparatus according to claim 1, **characterized by** further comprising:
a unit (20, 21) which prepares an object data pattern from the digital data,
**characterized in that** the determining unit (20) compares the object data pattern with the data pattern for determining included in the data for determining, and determines that the object data pattern is the reproduction prohibition object data pattern, when the object data pattern is identical or similar to the data pattern for determining.

4. The data reproducing apparatus according to claim 1, **characterized in that** the storage unit (22) stores the data for determining capable of identifying any of an image data pattern, a character string data pattern, and a pattern for detection of flash video as the reproduction prohibition object data pattern.

5. The data reproducing apparatus according to claim 1, **characterized by** further comprising:
a unit (20, 21) which prepares an object data pattern which is a shape image data pattern constituted of contours from the digital data,
**characterized in that** the storage unit (22) stores the data for determining including a data pattern for determining to identify an image data pattern as the reproduction prohibition object data pattern, and
the determining unit (20) compares the object data pattern with the data pattern for determining, and determines that the object data pattern_is the reproduction prohibition object data pattern, when the object data pattern is identical or similar to the data pattern for determining.

6. The data reproducing apparatus according to claim 1, **characterized in that** the control unit (19) executes processing to remove data corresponding to the reproduction prohibition object data pattern from the digital data.

7. The data reproducing apparatus according to claim 1, **characterized in that** the control unit (19) executes processing to change data corresponding to the reproduction prohibition object data pattern to another data pattern.

8. The data reproducing apparatus according to claim 1, **characterized by** further comprising:
a unit (20, 21) which detects a candidate data pattern constituting a candidate of a reproduction prohibition object including some of reproduction prohibition conditions from the digital data,
**characterized in that** the determining unit (20) determines whether or not the candidate data pattern is the reproduction prohibition object data pattern based on the reproduction prohibition conditions included in the data for determining.

9. The data reproducing apparatus according to claim 1, **characterized by** further comprising:
a unit (20, 21) which detects a candidate data pattern constituting a candidate of a reproduction prohibition object including some of reproduction prohibition conditions from the digital data,
**characterized in that** the determining unit (20) determines whether or not the candidate data pattern is identical or similar to the reproduction prohibition object data pattern set beforehand based on the reproduction prohibition conditions included in the data for determining.

10. The data reproducing apparatus according to claim 1, **characterized by** further comprising:
a unit (17) which converts the digital data reproduced/processed by the control unit (19) to a reproducing signal to reproduce/output the signal on a display screen of a display device (18).

11. The data reproducing apparatus according to claim 1, **characterized by** further comprising:
a disk drive (40) in which the digital data input from the outside is stored.

12. A method of reproducing digital data, **characterized by** comprising steps of:
storing the digital data which is a reproduction object in a buffer memory (S1);
preparing an object data pattern from the digital data (S3);
comparing a data pattern for determining to identify a reproduction prohibition object data pattern with the object data pattern, and judging that the object data pattern is the reproduction prohibition object data pattern, when the data pattern for determining is identical or similar to the object data pattern (S4, S5); and
processing data corresponding to the reproduction prohibition object data pattern to execute reproduction processing of the digital data except for the reproduction prohibition object data pattern (S6).

13. A method according to claim 12, **characterized in that** the preparing step comprises: preparing the object data pattern which is a shape image data pattern constituted of contours from the digital data.

14. A method according to claim 12, **characterized in that** the processing step comprises: executing processing to remove data corresponding to the reproduction prohibition object data pattern from the digital data.

15. A method according to claim 12, **characterized in that** the processing step comprises: executing processing to change data corresponding to the reproduction prohibition object data pattern to another data pattern.

16. A method according to claim 12, **characterized by** further comprising steps of:
detecting a candidate data pattern which is a candidate for a reproduction prohibition object including some of reproduction prohibition conditions from the digital data (S17); and
determining whether or not the candidate data pattern is identical or similar to the reproduction prohibition object data pattern set beforehand (S18, S19) .
